# EUROPEAN PATENT SPECIFICATION

(11) **EP 0 384 623 B1**
(45) Date of publication and mention of the grant of the patent: **02.03.1994**
(21) Application number: 90301437.1
(22) Date of filing: 12.02.1990
(51) Int. Cl.: E21B 10/56, C22C 1/04

(54) **Improvements in or relating to cutting elements for rotary drill bits**
Schneidelemente für Drehbohrmeissel
Eléments de coupe pour trépan de forage

(30) Priority: 14.02.1989 GB 8903246; 10.11.1989 GB 8925409
(43) Date of publication of application: 29.08.1990
(73) Proprietor: CAMCO DRILLING GROUP LIMITED, Stonehouse, Gloucestershire GL10 3RQ (GB)
(72) Inventor: Griffin, Nigel Dennis, Whitminster, Glocestershire (GB)
(74) Representative: Carter, Gerald

(56) References cited:
- EP-A- 0 098 944
- GB-A- 2 216 577
- US-A- 3 982 911
- US-A- 4 319 707
- US-A- 4 626 281
- US-A- 4 979 234

## Description

The invention relates to rotary drill bits for use in drilling or coring holes in subsurface formations and, in particular, to cutting elements for use on such bits, and methods of manufacturing such cutting elements.

Rotary drill bits of the kind to which the invention relates comprise a bit body having a shank and a passage for supplying drilling fluid to the face of the bit. The bit body carries a plurality of so called "preform" cutting elements. Each cutting element comprises a thin facing table of superhard material, which defines the front cutting face of the element, bonded to a less hard substrate. Such cutting elements are known from US-A-4,319,707.

Normally the superhard table is formed of polycrystalline diamond material and the substrate is formed of cemented tungsten carbide. The preform cutting elements are usually mounted on the bit body by being bonded, for example by brazing, to a carrier which may be in the form of a stud of tungsten carbide which is received and located in a socket in the bit body.

Tungsten carbide has certain characteristics which render it particularly suitable for use in the substrate and carrier of such a cutter assembly. Thus, it exhibits high rigidity, high resistance to the erosion to which such cutter assemblies are subject in use, and hot strength. Also, the coefficient of expansion of tungsten carbide is sufficiently close to the coefficient of expansion of polycrystalline diamond to reduce the residual stresses which can occur when the two materials are bonded together. However, some of the other characteristics of cemented tungsten carbide have certain disadvantages. For example, cemented tungsten carbide has low toughness (i.e. it is comparatively brittle) and this can lead to failure of such cutter assemblies in use, as a result of impact forces on the assembly.

Also, when a preformed cutting element of the kind referred to is mounted on a drill bit, it is mounted with its front face facing in the direction of movement, its rear face trailing behind and part of the peripheral surface of the cutting element, between the front and rear surfaces, rubbing on the formation being drilled. As drilling proceeds this intermediate surface wears down to form a wear-flat.

Due to its two-layer construction, the cutting element is self-sharpening since the part of the less hard substrate which rubs on the formation wears away more quickly than the part of the diamond table rubbing on the formation. Since the rearward substrate wears away more quickly, it does not bear on the formation being cut to the same extent or with the same pressure as the diamond table. The compact is therefore rendered self-sharpening by this constant greater wearing away of material rearwardly of the front cutting face.

However, the abrasion resistance of the wear-flat rubbing on the formation generates heat which is additional to the heat generated by cutting. Tungsten carbide has high abrasion resistance, and when the substrate is formed from tungsten carbide the additional heat generated by abrasion may be sufficient to cause the thermally activated deterioration of the diamond table at an increasingly rapid rate. It is generally accepted that a standard cutting element of the kind described, having a tungsten carbide substrate, generally operates efficiently only until it is about 30% worn. From thereon the cutting element may become thermally unstable and wear extremely rapidly leading quickly to failure of the cutter. When a sufficient number of cutting elements have failed in this manner the bit becomes useless for further drilling.

The combination of low toughness and high heat generation can also cause heat checking of the tungsten carbide carrier material with resultant premature failure of the bit. "Heat checking" is a term in the art which refers to craze cracking of the wear flat which develops on the carrier, due to abrasive heating with intermittent quenching by the drilling fluid.

The approach taken by the present invention is to overcome the above-mentioned problems by reducing the abrasion resistance of the less hard substrate of the cutting element so as to reduce the additional heat generated by rubbing of the wear-flat on the formation being drilled. It is, however, desirable that abrasion resistance of the substrate should be reduced without also reducing its erosion resistance. In use the cutting elements are subjected to the substantial eroding effect of abrasive drilling fluid flowing over the cutting elements continuously during drilling. Existing cutting elements having a cemented tungsten carbide substrate have considerable resistance to such erosion and this should preferably not be significantly reduced in attempting to reduce the abrasion resistance.

According to one aspect of the invention there is provided a cutting element for a rotary drill bit comprising a thin superhard table of polycrystalline diamond material, defining a front cutting face, bonded to a less hard substrate, wherein the substrate is formed from a material containing at least a proportion of tungsten metal.

Use of a substrate containing tungsten metal may overcome the problems described above with relation to the existing cemented tungsten carbide material. The presence of the tungsten metal in the substrate has the effect of reducing the abrasion resistance of the substrate, and thereby reducing the heat generated by rubbing of the wear flat of the substrate on the formation being drilled.

In addition, the tungsten-containing material may be even stronger than cemented tungsten carbide in cantilever bending and shear forces to which cutter assemblies may be subject in use.

The material of the substrate preferably contains at least about 50% (by weight) tungsten metal, for example at least about 80%. In a preferred embodiment the substrate is formed of a metal matrix composite comprising tungsten metal particles in a metal binder phase.

The metal matrix composite may be formed by a sintering process, or by hot-pressing.

Any suitable metal or metal alloy may be used as the metal binder phase of the composite. For example, any of the following materials may be suitable: Cu, Co, Ni + Cu, Ni + Fe, Ni + Fe + Mo, Co + Ni.

In one embodiment according to the invention the metal matrix composite has the following composition (percentages by weight):
- W: 95%
- Ni: 3.5%
- Fe: 1.5%

The invention includes within its scope arrangements where the substrate is formed of a metal matrix including tungsten metal in addition to the tungsten carbide normally used. In such embodiments of the invention the tungsten metal and tungsten carbide together may constitute at least about 50% by weight of the material from which the carrier is formed, and preferably at least about 80%.

The metal matrix composite may include tungsten metal particles and tungsten carbide particles in a metal binder phase and may be formed by sintering, by an infiltration process or by hot pressing a mixture of powdered tungsten carbide and tungsten metal with a catalyst, such as cobalt.

In the case where the substrate includes tungsten carbide, the tungsten metal may be replaced by another refractory material which is softer than the tungsten carbide. Such refractory materials include boron, hafnium, iridium, molybdenum, niobium, osmium, rhenium, rhodium, tantalum and zirconium.

Accordingly the invention further provides a cutting element for a rotary drill bit comprising a thin hard facing table of polycrystalline diamond material, defining a front cutting face, bonded to a less hard substrate, wherein the substrate comprises a compound of cemented tungsten carbide and a softer refractory material.

The invention also provides a method of forming a cutting element for a rotary drill bit comprising placing in a high pressure/high temperature press a layer of polycrystalline diamond particles, said layer having a front face and a rear face, and, in contact with said rear face, a further layer including at least a proportion of tungsten metal, and subjecting said layers to high pressure and temperature so as to form, on cooling, a solid composite compact comprising a superhard table of polycrystalline diamond material bonded to a less hard substrate containing at least a proportion of tungsten metal.

The invention further provides a method of forming a cutting element for a rotary drill bit comprising placing in a high pressure/high temperature press a layer of polycrystalline diamond particles, said layer having a front face and a rear face, and, in contact with said rear face, a further layer comprising a mixture including powdered tungsten carbide, a powdered softer refractory material and a catalyst, and subjecting said layers to high pressure and temperature so as to form, on cooling, a solid composite compact comprising a superhard table of polycrystalline diamond material bonded to a less hard substrate comprising a compound including cemented tungsten carbide and said softer refractory material.

The invention includes within its scope a cutter assembly for a rotary drill bit comprising a cutting element according to the invention mounted, for example by brazing, on a carrier which may be in the form of a stud or post to be received in a socket in the bit body.

The invention also includes within its scope a rotary drill bit of the kind first referred to including cutting elements or cutter assemblies according to the invention.

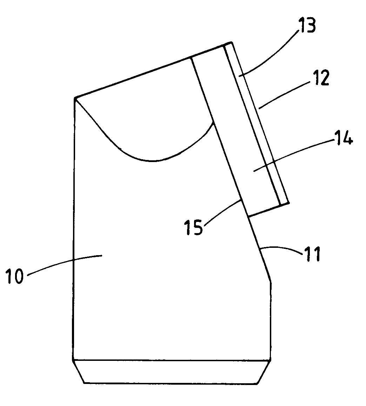

The following is a more detailed description of an embodiment of the invention, reference being made to the accompanying drawing which is a side elevation of a typical cutter assembly to which the present invention may be applied.

The cutter assembly comprises a generally cylindrical stud 10, which is formed adjacent one end thereof with an inclined plane surface 11 which is disposed at an angle to the longitudinal axis of the stud 10. The stud 10 may be formed from cemented tungsten carbide, but is preferably formed from a material containing at least a proportion of tungsten metal in accordance with GB-A-2216577.

Mounted on the inclined surface 11 of the stud is a preform cutting element 12 comprising a superhard facing table 13 of polycrystalline diamond bonded to a thicker and less hard substrate 14. The cutting element 12 is in the form of a circular disc.

The rear surface 15 of the cutting element is flat and is brazed to the inclined plane surface 11 of the stud 10. The cutting element may be brazed to the stud by the process known as "LS bonding" in which a heat sink is applied to the polycrystalline diamond table of the cutting element to prevent thermal degradation of the table during the bonding process.

A plurality of such cutter assemblies are mounted in the body of a rotary drill bit of the kind first referred to. The bit body is formed over the surface thereof with a plurality of cylindrical sockets of circular cross-section and received in each socket is the stud 10 of a cutter assembly. The cutter assembly is usually shrink-fitted or brazed into its socket. The general construction of such drill bits is well known and will not therefore be described in further detail.

Hitherto, prior art two-layer cutting elements of the kind shown in the drawing have comprised a substrate 14 of cemented tungsten carbide. The front diamond table 13 and the substrate 14 are formed simultaneously by placing layers of polycrystalline diamond particles and tungsten carbide in a high pressure/high temperature press, a catalyst, such as cobalt, normally also being present in the layer of tungsten carbide.

According to the present invention, the material to form the substrate includes at least a proportion of tungsten metal, or comprises tungsten carbide and tungsten metal or some other softer refractory material.

In one embodiment of the invention the substrate 14 is a metal matrix composite having the following composition (percentages by weight):
- W: 95%
- Ni: 3.5%
- Fe: 1.5%

In this example the percentage of tungsten metal is greater than 80%, but lower percentages of tungsten metal may also provide advantage. Preferably, however, the material contains at least about 50% tungsten metal.

Lower percentages of tungsten metal may be appropriate in the case where the material of the substrate also includes tungsten carbide, such as a metal matrix composite including tungsten metal particles and tungsten carbide particles in a metal binder phase.

In the case where the substrate includes tungsten carbide, the tungsten metal may be replaced by another refractory material which is softer than the tungsten carbide. Such refractory materials include boron, hafnium, iridium, molybdenum, niobium, osmium, rhenium, rhodium, tantalum and zirconium.

Where the material includes tungsten carbide, the tungsten metal (or other softer refractory material) and tungsten carbide together preferably constitute at least about 50% by weight, and more preferably 80%, of the material from which the carrier is formed. The substrate may be formed by sintering or hot-pressing. Such methods are well known in the art and will not therefore be described in detail.

As previously explained, the presence of the tungsten metal or other softer refractory material in the substrate 14 serves to reduce the abrasion resistance of the substrate. The reduction in abrasion resistance results in less generation of heat when the cutting element bears against the formation being drilled, and thus delays the onset of thermal degradation of the diamond table.

As previously mentioned, although the stud 10 may be formed from cemented tungsten carbide, it might also be formed from similar material to the substrate 14, and may comprise, for example, tungsten carbide including a softer refractory material such as tungsten metal, as described in GB-A-2216577. This may be advantageous, since after a certain degree of wear has occurred the wear-flat will also extend across part of the end of the stud 10, and reduction of the abrasion resistance of the stud will in that case assist in reducing the heat generated during drilling.

## Claims

1. A cutting element for a rotary drill bit comprising a thin superhard table (13) of polycrystalline diamond material, defining a front cutting face, bonded to a less hard substrate (14), characterised in that the substrate (14) is formed from a material comprising at least about 50% (by weight) tungsten metal.

2. A cutting element according to Claim 1, characterised in that the material of the substrate (14) contains at least about 80% (by weight) tungsten metal.

3. A cutting element according to Claim 1 or Claim 2, characterised in that the substrate (14) is formed of a metal matrix composite comprising tungsten metal particles in a metal binder phase.

4. A cutting element according to Claim 3, characterised in that the metal matrix composite is sintered.

5. A cutting element according to Claim 3, characterised in that the metal matrix composite is hot-pressed.

6. A cutting element according to any of Claims 3 to 5, characterised in that the metal binder phase of the composite comprises a material selected from: Cu, Co, Ni + Cu, Ni + Fe, Ni + Fe + Mo, Co + Ni.

7. A cutting element according to Claim 6, characterised in that the metal matrix composite has the following composition (percentages by weight):
W 95%
Ni 3.5%
FE 1.5%

8. A cutting element according to any of Claims 1 to 6, characterised in that the substrate (14) further includes tungsten carbide.

9. A cutting element according to Claim 8, characterised in that the tungsten metal and tungsten carbide together constitute at least about 50% by weight of the material from which the substrate (14) is formed.

10. A cutting element according to Claim 8, characterised in that the tungsten metal and tungsten carbide together constitute at least about 80% by weight of the material from which the substrate (14) is formed.

11. A cutting element according to any of Claims 9 to 10, characterised in that the substrate (14) comprises a metal matrix composite including tungsten metal particles and tungsten carbide particles in a metal binder phase.

12. A cutting element according to Claim 11, characterised in that the metal matrix composite is formed by sintering, by an infiltration process, or by hot pressing a mixture of powdered tungsten carbide and tungsten metal with a catalyst.

13. A cutting element for a rotary drill bit comprising a thin hard facing table (13) of polycrystalline diamond material, defining a front cutting face, bonded to a less hard substrate (14), characterised in that the substrate comprises a compound of cemented tungsten carbide particles and particles of a refractory material which is softer than tungsten carbide, the particles of refractory material being sufficient to substantially reduce the abrasion resistance of the cemented tungsten carbide alone.

14. A cutter assembly for a rotary drill bit comprising a cutting element (12) mounted on a carrier (10) in the form of a stud to be received in a socket in the bit body, the cutting element comprising a thin superhard table (13) of polycrystalline diamond material, defining a front cutting face, bonded to a less hard substrate (14) characterised in that the substrate is formed from a material comprising at least about 50% (by weight) tungsten metal and is bonded to a surface on the stud.

15. A cutter assembly for a rotary drill bit comprising a cutting element (12) mounted on a carrier (10) in the form of a stud to be received in a socket in the bit body, the cutting element comprising a thin superhard table (12) of polycrystalline diamond material, defining a front cutting face, bonded to a less hard substrate (14), characterised in that the substrate is bonded to a surface on the stud and comprises a compound of cemented tungsten carbide particles and particles of a refractory material which is softer than tungsten carbide, the particles of refractory material being sufficient to substantially reduce the abrasion resistance of the cemented tungsten carbide alone.

16. A method of forming a cutting element for a rotary drill bit comprising placing in a high pressure/high temperature press a layer of polycrystalline diamond particles, said layer having a front face and a rear face, and, in contact with said rear face, a further layer of a substrate material which is less hard than the polycrystalline diamond, and subjecting said layers to high pressure and temperature so as to form, on cooling, a solid composite compact comprising a superhard table (13) of polycrystalline diamond material bonded to a less hard substrate (14), characterised in that the substrate material comprises at least about 50% (by weight) of tungsten metal.

17. A method of forming a cutting element for a rotary drill bit comprising placing in a high pressure/high temperature press a layer of polycrystalline diamond particles, said layer having a front face and a rear face, and, in contact with said rear face, a further substrate layer including powdered tungsten carbide, and subjecting said layers to high pressure and temperature so as to form, on cooling, a solid composite compact comprising a superhard table (13) of polycrystalline diamond material bonded to a less hard substrate, characterised in that the substrate layer includes, in addition to the tungsten carbide, a powdered softer refractory material and a catalyst.

18. A method according to Claim 17, characterised in that the softer refractory material is tungsten metal and the catalyst is cobalt.

## Patentansprüche

1. Schneideelement für einen Drehbohrmeissel, mit einer dünnen, superharten Platte (13) aus polykristallinem Diamantmaterial, welche eine Frontschneidefläche bildet und an einem weniger harten Substrat (14) festgemacht ist, dadurch gekennzeichnet, dass das Substrat (14) aus einem Material besteht, welches aus mindestens etwa 50 Gewichtsprozent Wolframmetall besteht.

2. Schneideelement nach Anspruch 1, dadurch gekennzeichnet, dass das Material des Substrats (14) wenigstens etwa 80 Gewichtsprozent Wolframmetall enthält.

3. Schneideelement nach Anspruch 1 oder 2, dadurch gekennzeichnet, dass das Substrat (14) aus einer Metallverbundmatrix besteht, welche Wolframmetallteilchen in einer Metallbindephase enthält.

4. Schneideelement nach Anspruch 3, dadurch gekennzeichnet, dass die Metallverbundmatrix gesintert ist.

5. Schneideelement nach Anspruch 3, dadurch gekennzeichnet, dass die Metallverbundmatrix warmgepresst ist.

6. Schneideelement nach einem der Ansprüche 3 bis 5, dadurch gekennzeichnet, dass die Metallbindephase der Verbundmatrix ein Material enthält, welches ausgewählt wurde von Cu, Co, Ni + Cu, Ni + Fe, Ni + Fe + Mo, Co + Ni.

7. Schneideelement nach Anspruch 6, dadurch gekennzeichnet, dass die Metallverbundmatrix die folgende Zusammenstellung (in Gewichtsprozenten) hat:
W 95%
Ni 3.5%
Fe 1.5%

8. Schneideelement nach einem der Ansprüche 1 bis 6, dadurch gekennzeichnet, dass das Substrat (14) desweitern Wolframkarbid enthält.

9. Schneideelement nach Anspruch 8, dadurch gekennzeichnet, dass das Wolframmetall und Wolframkarbid zusammen wenigstens etwa 50 Gewichtsprozent des Materials bilden, aus welchem das Substrat (14) geformt ist.

10. Schneideelement nach Anspruch 8, dadurch gekennzeichnet, dass das Wolframmetall und Wolframkarbid zusammen wenigstens etwa 80 Gewichtsprozent des Materials bilden, aus welchem das Substrat (14) geformt ist.

11. Schneideelement nach einem der Ansprüche 9 bis 10, dadurch gekennzeichnet, dass das Substrat (14) eine Metallverbundmatrix ist, welche Wolframmetallteilchen und Wolframkarbidteilchen in einer Metallbindephase enthält.

12. Schneideelement nach Anspruch 11, dadurch gekennzeichnet, dass die Metallverbundmatrix durch Sintern, ein Infiltrationsverfahren, oder durch Warmpressen einer Mischung aus pulverförmigen Wolframkarbid und Wolframmetall mit einem Katalysator, gebildet wird.

13. Schneideelement für einen Drehbohrmeissel, mit einer dünnen harten Aussenplatte (13) aus polykristallinem Diamantmaterial, welche eine Frontschneidefläche bildet und an einem weniger harten Substrat (14) festgemacht ist, dadurch gekennzeichnet, dass das Substrat ein Gemisch aus zementierten Wolframkarbidteilchen und Teilchen aus einem feuerfesten Material, welches weicher als Wolframkarbid ist, besteht, wobei die Teilchen des feuerfesten Materials ausreichen, um den Verschleisswiderstand des zementierten Wolframkarbids allein wesentlich zu verringern.

14. Schneideeinheit für einen Drehbohrmeissel, mit einem Schneideelement (12), welches auf einem Träger (10) in Form eines Zapfens, welcher in einem Sockel in dem Meisselkörper aufgenommen werden soll, montiert ist, wobei das Schneideelement aus einer dünnen, superharten Platte (14) aus polykristallinem Diamantmaterial, welche eine Frontschneidefläche bildet und an einem weniger hartem Substrat (14) festgemacht ist, besteht, dadurch gekennzeichnet, dass das Substrat aus einem Material gebildet ist, welches mindestens etwa zu 50 Gewichtsprozent aus Wolframmetall besteht und mit einer Oberfläche des Zapfens verbunden ist.

15. Schneideeinheit für einen Drehbohrmeissel, mit einem Schneideelement (12), welches auf einem Träger (10) in Form eines Zapfens, welcher in einem Sockel im Meisselkörper aufgenommen werden soll, montiert ist, wobei das Schneideelement aus einer dünnen, superharten Platte (12) aus polykristallinem Diamantmaterial, welche eine Vorderschneidefläche bildet und an einem weniger harten Substrat (14) festgemacht ist, besteht, dadurch gekennzeichnet, dass das Substrat an einer Fläche des Zapfens festgemacht ist und aus einer Mischung von zementierten Wolframkarbidteilchen und Teilchen aus einem feuerfesten Material, welches weicher als Wolkramkarbid ist, besteht, wobei die Teilchen des feuerfesten Materials ausreichen, um den Verschleisswiderstand der zementierten Wolframkarbidteilchen allein wesentlich zu verringern.

16. Verfahren zum Bilden eines Schneideelementes für einen Drehbohrmeissel, bei welchem eine Schicht aus polykristallinen Diamantteilchen in eine Hochdruck/Hochtemperatur-Presse angeordnet wird, wobei die Schicht eine vordere Fläche und eine hintere Fläche hat und eine weitere Schicht eines Substratmaterials, welches weniger hart als das polykristalline Diamantmaterial ist, mit der hinteren Fläche in Berührung steht, und die Schichten hohem Druck und hoher Temperatur ausgesetzt werden, um so, nach Abkühlung, einen soliden Verbundpressling zu bilden, welcher eine superharte Platte (14) aus polykristallinem Material umfasst, welche an einem weniger harten Substrat (15) festgemacht ist, dadurch gekennzeichnet, dass das Substratmaterial wenigstens zu rund 50 Gewichtsprozent aus Wolframmetall besteht.

17. Verfahren zum Bilden eines Schneideelementes für einen Drehbohrmeissel, bei welchem eine Schicht aus polykristallinen Diamantteilchen in eine Hochdruck/Hochtemperatur-Presse angeordnet wird, wobei die Schicht eine vordere Fläche und eine hintere Fläche hat, sowie eine weitere Substratschicht, welche aus pulverförmigem Wolframkarbid besteht, die mit der Rückseite in Berührung ist, und die Schichten hohem Druck und hoher Temperatur ausgesetzt werden, um so, nach Abkühlung, einen soliden Verbundpressling zu bilden, welcher aus einer superharten Platte (13) aus polykristallinem Diamantmaterial besteht, welche an einem weniger harten Substrat festgemacht ist, dadurch gekennzeichnet, dass die Substratschicht, zusätzlich zum Wolframkarbid, ein pulverförmiges, weiches, feuerfeste Material und einen Katalysator enthält.

18. Verfahren nach Anspruch 17, dadurch gekennzeichnet, dass das weichere, feuerfeste Material Wolframmetall und der Katalysator Kobalt sind.

## Revendications

1. Elément de coupe pour un trépan de forage rotatif, comprenant une plaque (13) mince et supradure d'une matière polycristalline diamantée, définissant une surface de coupe frontale, fixée à un substrat (14) moins dur, caractérisé en ce que le substrat (14) est formé d'une matière comprenant au moins environ 50% en poids de tungstène métallique.

2. Elément de coupe selon la revendication 1, caractérisé en ce que la matière du substrat (14) contient au moins environ 80% en poids de tungstène métallique.

3. Elément de coupe selon la revendication 1 ou 2, caractérisé en ce que le substrat (14) est formé d'une matrice composite métallique contenant des particules de tungstène métallique dans une phase liante métallique.

4. Elément de coupe selon la revendication 3, caractérisé en ce que la matrice composite métallique est frittée.

5. Elément de coupe selon la revendication 3, caractérisé en ce que la matrice composite métallique est pressée à chaud.

6. Elément de coupe selon une des revendications 3 à 5, caractérisé en ce que la phase liante métallique de la matrice composite est une matière choisie parmi Cu, Co, Ni + Cu, Ni + Fe, Ni + Fe + Mo, Co + Ni.

7. Elément de coupe selon la revendication 6, caractérisé en ce que la matrice composante métallique a la composition suivante en pourcentage de poids:
W 95%
Ni 3.5%
Fe 1.5%

8. Elément de coupe selon une des revendications 1 à 6, caractérisé en ce que le substrat (14) contient en outre du carbure de tungstène.

9. Elément de coupe selon la revendication 8, caractérisé en ce que le tungstène métallique et le carbure de tungstène constituent ensemble au moins environ 50% en poids de la matière dont le substrat (14) est formé.

10. Elément de coupe selon la revendication 8, caractérisé en ce que le tungstène métallique et le carbure de tungstène constituent ensemble au moins environ 80% en poids de la matière dont le substrat (14) est formé.

11. Elément de coupe selon une quelconque des revendications 9 à 10, caractérisé en ce que le substrat (14) est formé par une matrice composite métallique contenant des particules de tungstène métallique et des particules de carbure de tungstène dans une phase liante métallique.

12. Elément de coupe selon la revendication 11, caractérisé en ce que la matrice composite métallique est formée par frittage, par un procédé d'infiltration, ou par compression à chaud d'un mélange de poudre de carbure de tungstène et de tungstène métallique avec un catalyseur.

13. Elément de coupe pour un trépan de forage rotatif, comprenant une plaque extérieure (13) mince et dure d'une matière polycristalline diamantée définissant une surface de coupe frontale, fixée à un substrat (14) moins dur, caractérisé en ce que le substrat est formé d'un composé de particules de carbure de tungstène cimenté et de particules d'une matière réfractaire qui est plus molle que le carbure de tungstène, les particules de la matière réfractaire étant suffisantes pour substantiellement réduire la résistance à l'abrasion du carbure de tungstène cimenté seul.

14. Unité de coupe pour un trépan de forage rotatif, comprenant un élément de coupe (12) monté sur un support (10) en forme d'une colonnette destinée à être reçue dans un socle dans le corps du trépan, l'élément de coupe comprenant une plaque (13) mince et supradure d'une matière polycristalline diamantée, définissant une surface de coupe frontale, fixée à un substrat (14) moins dûr, caractérisée en ce que le substrat est formé d'une matière comprenant au moins environ 50% en poids de tungstène métallique et est fixé à une surface sur la colonnette.

15. Unité de coupe pour un trépan de forage rotatif, comprenant un élément de coupe (12) monté sur un support (10) en forme d'une colonnette destinée à être reçue dans un socle dans le corps du trépan, l'élément de coupe comprenant une plaque (12) mince et supradure de matière polycristalline diamantée, définissant une surface de coupe frontale, fixée à un substrat moins dûr (14), caractérisée en ce que le substrat est fixé à une surface sur la colonnette et comprend un composé de particules de carbure de tungstène cimenté et de particules d'une matière réfractaire qui est plus molle que le carbure de tungstène, les particules de la matière réfractaire étant suffisantes pour substantiellement réduire la résistance à l'abrasion du carbure de tungstène cimenté seul.

16. Procédé pour former un élément de coupe pour un trépan de forage rotatif, selon lequel une couche de particules polycristallines diamantées est placée dans une presse de haute pression et haute température, ladite couche ayant une face frontale et une face arrière et, en contact avec la face arrière, une couche supplémentaire d'une matière de substrat qui est moins dure que la matière polycristalline diamantée, et selon lequel lesdites couches sont soumises à une haute pression et haute température de sorte à former, après refroidissement, un comprimé composite solide comprenant une plaque supradure (11) de matière polycristalline diamantée fixée à un substrat (14) moins dûr, caractérisé en ce que la matière de substrat comprend au moins environ 50% en poids de tungstène métallique.

17. Procédé pour former un élément de coupe pour un trépan de forage rotatif, selon lequel une couche de particules polycristallines diamantées est placée dans une presse de haute pression et haute température, ladite couche ayant une face frontale et une face arrière et, en contact avec ladite face arrière, une couche de substrat supplémen-taire formée de poudre de carbure de tungstène, et selon lequel lesdites couches sont soumises à une haute pression et haute température de sorte à former, après refroidissement, un comprimé composite solide comprenant une plaque supradure (13) de matière polycristalline diamantée fixée à un substrat moins dûr, caractérisé en ce que la couche de substrat comprend, en plus au carbure de tungstène, une poudre de matière réfractaire plus molle et un catalyseur.

18. Procédé selon la revendication 17, caractérisé en ce que la couche de matière réfractaire plus molle est du tungstène métallique et le catalyseur est du cobalt.
